# FASCICULE DE BREVET EUROPEEN

(11) **EP 2 539 786 B1**
(45) Date de publication et mention de la délivrance du brevet: **08.04.2015**
(21) Numéro de dépôt: 11712925.4
(22) Date de dépôt: 17.02.2011
(51) Int. Cl.: G05B 23/02, F02K 9/96

(54) **SYSTEME DE DETECTION ET DE LOCALISATION DE PANNES ET MOTEUR COMPORTANT UN TEL SYSTEME**
SYSTEM ZUR ERKENNUNG UND ORTUNG VON MOTORAUSFÄLLEN UND MOTOR MIT DERARTIGEM SYSTEM
SYSTEM FOR DETECTING AND LOCATING ENGINE BREAKDOWNS AND ENGINE COMPRISING SUCH A SYSTEM

(30) Priorité: 24.02.2010 FR 1051322
(43) Date de publication de la demande: 02.01.2013
(73) Titulaire: SNECMA, 75015 Paris (FR)
(72) Inventeur: LE GONIDEC, Serge, F-27200 Vernon (FR); BORNERT, Pierre, F-27200 Vernon (FR); LEMAITRE, Alban, F-27200 Vernon (FR)
(74) Mandataire: Delumeau, François Guy
(86) Numéro de dépôt international: PCT/FR2011/050334
(87) Numéro de publication internationale: WO 2011/104466

(56) Documents cités:
- US-A- 4 644 479
- US-A- 4 977 395
- US-A- 5 132 920

## Description

L'invention se situe dans le domaine de la détection de pannes.

Elle vise plus particulièrement un système apte à établir un diagnostic d'une panne dans un système complexe, et à prendre une mesure adéquate en fonction de ce diagnostic.

L'invention peut par exemple être utilisée pour surveiller un système complexe comme un moteur de fusée, lors de sa mise au point sur un banc d'essai.

Dans l'état actuel de la technique, il est usuel de surveiller un système complexe en surveillant le fonctionnement d'une pluralité de composants de ce système pris individuellement et de prendre une décision, par exemple celle de l'arrêt du système, lorsqu'un certain nombre de ces composants sont jugés défaillants. Ces techniques utilisent une approche dite « par logique majoritaire » (en anglais « majority voting systems » ou « voting logic »).

L'approche par logique majoritaire est perfectible pour la surveillance de systèmes très complexes dans lesquels des disfonctionnements de natures très différentes, soit quant à leur origine, soit quant à leur niveau de gravité sont susceptibles de se produire.

### Objet et résumé de l'invention

L'invention propose un système de détection et de localisation de pannes dans un système complexe comportant :
- au moins un capteur pour délivrer un signal représentatif du fonctionnement d'un composant dudit système complexe ;
- au moins un module de validation du bon fonctionnement de ce capteur apte à analyser ce signal et à délivrer :
   - au moins un signal validé associé à un niveau de confiance dit de « premier ordre » ; ou
   - un message représentatif d'une panne d'au moins un capteur ;
- un module de détection de panne apte à détecter une panne affectant au moins un sous-système ou un composant à partir du signal validé, et lorsque c'est le cas, à générer au moins un message de panne brut comportant des informations brutes sur la panne et un niveau de confiance dit de « deuxième ordre » ;
- un module de fusion de données apte à générer, au moins à partir d'un message de panne brut ou du message représentatif d'une panne de capteur, un message de panne consolidé comportant des informations consolidées sur une panne affectant au moins un sous-système du système complexe et un niveau de confiance dit de « troisième ordre » ; et
- un module de prise de décision apte à obtenir ledit message de panne consolidé et à décider d'au moins une action à entreprendre en fonction :
   - des informations consolidées sur une panne ;
   - dudit niveau de confiance de troisième ordre ; et
   - d'un niveau de gravité de ladite panne.

Contrairement aux systèmes à logique majoritaire, le module de fusion de données du système selon l'invention combine les messages de pannes bruts entre eux en prenant en compte les paramètres de « niveau de confiance ».

Les messages de pannes bruts associés à leurs propres niveaux de confiance fournis en entrée du module de fusion de données proviennent des différents modules de détection de pannes associés à différents composants, sous-systèmes ou au système pris dans son ensemble.

Le système selon l'invention est ainsi avantageusement apte à établir un diagnostic précis de la panne en combinant et en affinant les informations venant des différents capteurs ou des modules de détection de pannes, pour les confirmer, les infirmer ou les tempérer par une opération de fusion des informations.

Contrairement aux systèmes par logique majoritaire, le système de détection et de localisation de pannes selon l'invention sait adapter l'action à entreprendre et en fonction de la gravité de la panne et de la fiabilité sur la connaissance de la panne.

Dans un mode particulier de réalisation, le module de prise de décision du système de détection et de localisation de panne selon l'invention comporte des moyens pour obtenir le niveau de gravité et pour identifier l'action à entreprendre, celle-ci étant mémorisée dans une base de données.

Cette base de données peut par exemple être constituée par une base de connaissance issue d'une analyse des défaillances et de leur criticité (AMDEC).

L'action à entreprendre en cas de détection d'une panne peut consister à arrêter le système complexe ou à agir sur un ou plusieurs de ses composants, ceux-ci étant déterminés en fonction de la panne et plus particulièrement à désactiver, activer ou réactiver un composant, à modifier son point de fonctionnement ou encore à faire une requête vers un système de régulation.

L'action à entreprendre peut aussi consister à attendre au moins un autre message de panne consolidé émis par le module de fusion de données pour confirmer si une action doit être entreprise ou non.

Cette caractéristique permet avantageusement de réduire le nombre d'arrêts intempestifs et de n'agir que lorsque le niveau de confiance dans la panne est suffisant, le caractère suffisant étant considéré en fonction du niveau de gravité de la panne.

Dans un mode de réalisation, le module de prise de décision du système de détection de pannes selon l'invention utilise une technique de logique floue. Cette caractéristique permet avantageusement d'introduire la notion de doute et d'indécision sur l'action à entreprendre.

Les techniques de logique floue (en anglais « fuzzy logic ») sont généralement utilisées dans des applications du type de celle de l'identification de cibles ou de la sélection de capteurs ; mais il est remarquable de noter que l'utilisation de logique floue conduisant à une décision entrainant une action physique sur un composant d'un système complexe, cette décision prenant en compte un indice de confiance sur une panne d'une part et sa criticité d'autre part, n'est pas connue de l'état de la technique.

L'invention vise aussi un moteur de fusée comportant un système de détection de panne tel que mentionné ci-dessus.

L'invention trouve un intérêt particulier pour la mise au point d'un moteur de fusée sur un banc d'essai, en ce qu'elle permet :
- de réduire le nombre d'arrêts d'essai intempestifs et d'agir en fonction du couple gravité de la panne / niveau de fiabilité sur la connaissance de la panne ;
- d'agir en fonction du type de panne ;
- d'attendre si besoin une confirmation de la panne avant d'agir ;
- d'être facilement évolutif en utilisant des modules de détection définis de façon modulaire en fonction de l'architecture du moteur ; et
- de prendre en compte la notion de doute sur l'action à entreprendre.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente l'architecture générale d'un système de détection de pannes conforme à un mode particulier de réalisation de l'invention ;
- la figure 2 représente un exemple de message de panne consolidé pouvant être utilisé dans un système de détection de pannes conforme à l'invention ;
- la figure 3 représente un enregistrement d'une base de données pouvant être utilisée dans un système de détection de pannes conforme à l'invention ;
- la figure 4 représente un moteur conforme à l'invention ;
- les figures 5A et 6A représentent des signaux générés par des capteurs du moteur de la figure 4 ;
- les figures 5B et 6B représentent des signaux délivrés par un module de validation du moteur de la figure 4 ainsi que des niveaux de confiance associés;
- la figure 7 représente des messages de pannes bruts générés par un ou plusieurs modules de détection de pannes du moteur de la figure 4;
- la figure 8 représente un message de panne consolidé généré par un module de fusion de données du moteur de la figure 4 ;

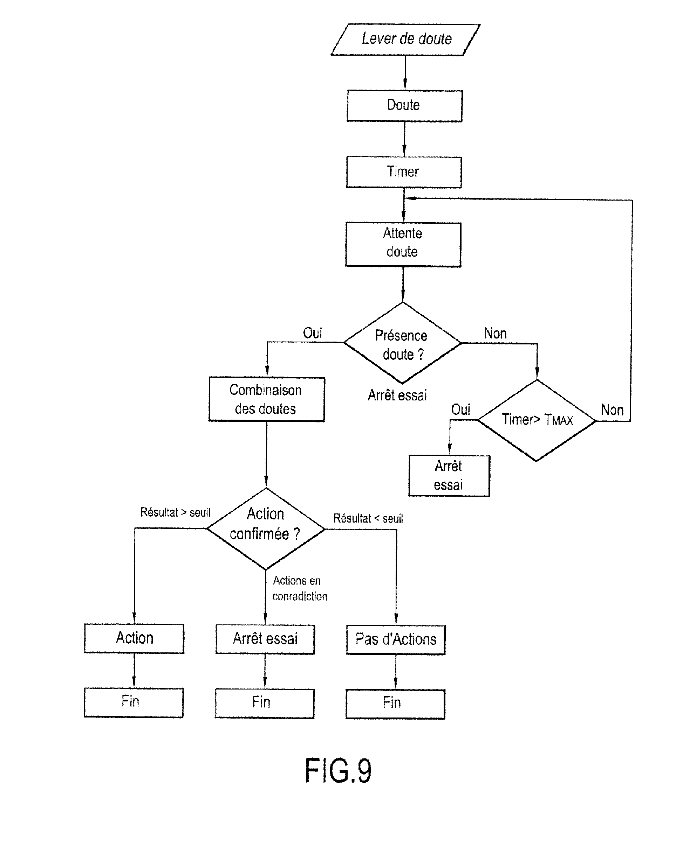

- la figure 9 représente, sous forme d'organigramme, un exemple de fonction pouvant être utilisée, pour lever un doute, par un module de décision dans un système de détection de pannes conforme à l'invention ; et
- les figures 10A et 10B représentent des fonctions d'appartenance pouvant être utilisées dans un module de prise de décision à logique floue selon un mode particulier de mise en oeuvre de l'invention.

### Description détaillée de modes de réalisation de l'invention.

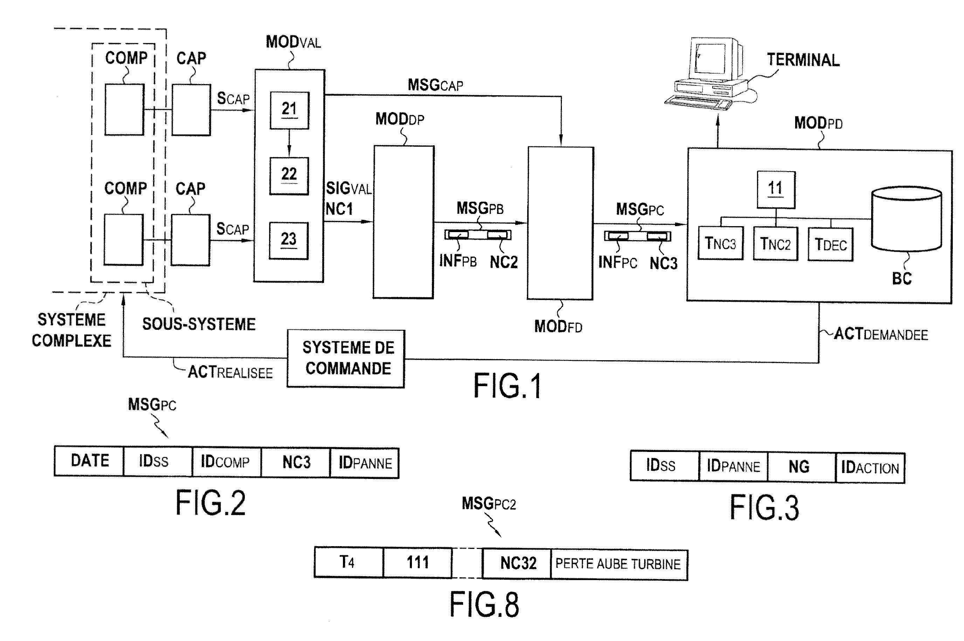

La **Figure 1** représente un système de détection de panne conforme à un mode particulier de réalisation de l'invention.

Ce système permet de détecter les pannes d'un système complexe comportant un ou plusieurs sous-systèmes, chacun de ces sous-systèmes comportant un ou plusieurs composants.

Le système de détection de panne selon l'invention comporte un certain nombre de capteurs CAP chacun de ces capteurs étant apte à délivrer un signal S_{CAP} représentatif du fonctionnement d'au moins un composant COMP du système complexe.

Dans l'exemple de la Figure 1, on a représenté deux composants COMP chacun associé à un capteur CAP apte à délivrer un signal S_{CAP} représentatif du composant auquel il est associé.

Les signaux S_{CAP} délivrés par les capteurs CAP peuvent par exemple être des signaux basse fréquence ; c'est notamment le cas lorsque ces capteurs mesurent un déplacement, un débit, une pression, une température ou une vitesse.

Les signaux S_{CAP} peuvent aussi être des signaux haute fréquence, notamment lorsque les capteurs auxquels ils sont associés mesurent des vibrations ou des pressions susceptibles de varier rapidement.

Le système de détection selon l'invention comporte un module de validation MOD_{VAL} apte à valider le bon fonctionnement de chacun des capteurs CAP.

Dans l'exemple de réalisation décrit ici, le module de validation MOD_{VAL} comporte :
- un modèle de référence 21 ;
- un module de détection de biais 22 ; et
- un module de détection de bruit 23.

Dans le mode de réalisation décrit ici, le module de validation MOD_{VAL} détecte les pannes affectant les capteurs CAP délivrant des signaux basse fréquence :
- soit par la détection d'un biais dans le signal S_{CAP} en utilisant des redondances de ce signal et/ou des sorties du modèle de référence 21 ; soit
- par la détection de bruits dans le signal S_{CAP}, un bruit nul indiquant un capteur CAP hors d'état et un bruit excessif indiquant un problème de nature électrique.

Dans le mode de réalisation décrit ici le module de validation MOD_{VAL} détecte des pannes affectant les capteurs délivrant des signaux S_{CAP} haute fréquence par la détection d'une non-symétrie dans ce signal.

Conformément à l'invention le module de validation MOD_{VAL} délivre, pour chaque mesure, un signal validé SIG_{VAL} associé à un niveau de confiance de premier ordre NC1 si le capteur est opérationnel ou un message MSG_{CAP} représentatif d'une panne de capteur.

Les messages MSG_{CAP} représentatifs d'une panne de capteur sont transmis à un module MOD_{FD} de fusion de données qui sera décrit ultérieurement.

Les signaux validés SIG_{VAL} et les niveaux de confiance de premier ordre NC1 qui leur sont associés sont transmis à un module MOD_{DP} de détection de panne.

Le module de détection de panne MOD_{DP} est apte à détecter des pannes affectant un composant, le système complexe dans son ensemble, ou un sous-système de ce système complexe.

Les algorithmes utilisés pour la détection de panne peuvent être de types divers et notamment mettre en oeuvre des fonctions de calcul de seuil, d'identification, de calcul de résidus, de filtrage, de comparaison avec des modèles physiques ou comportementaux ...

Le fonctionnement d'un module MOD_{DP} de détection de pannes sera décrit précisément en référence à la Figure 2 dans le contexte particulier d'une détection de pannes dans un moteur.

Le module de détection de panne MOD_{DP} est apte, lorsqu'il détecte une panne affectant un composant, un sous-système ou le système dans sa globalité, à générer un message MSG_{PB} de panne brut comportant des informations brutes INF_{PB} sur cette panne et un niveau de confiance NC2 de deuxième ordre.

Le système de détection de panne conforme à l'invention comporte également un module MOD_{FD} de fusion de données aptes à recevoir :
- d'une part les messages MSG_{CAP} représentatifs d'une panne de capteur ; et
- d'autre part les messages MSG_{PB} de panne bruts.

Le module MOD_{FD} de fusion de données a notamment pour objet de confronter et intégrer les informations brutes INF_{PB} multiples reçues dans les messages de pannes bruts MSG_{PB} et dans les messages MSG_{CAP} de pannes de capteur afin de réduire l'incertitude sur l'information résultante.

Le module de fusion de données MOD_{FD} génère par conséquent des messages MSG_{PC} de panne consolidés comportant des informations INF_{PC} consolidées sur une panne affectant le système dans son ensemble ou un sous-système du système complexe ou un composant et un niveau de confiance de troisième ordre.

Les messages de panne consolidés MSG_{PC} sont fournis, par le module MOD_{FD} de fusion de données à un module MOD_{PD} de prise de décision.

Le module MOD_{PD} de prise de décision est apte à prendre une décision sur l'action à entreprendre en fonction des informations consolidées INF_{PC} sur la panne du niveau de confiance de troisième ordre obtenu pour cette panne et du niveau de gravité de cette panne compris dans la base de connaissance BC.

Dans l'exemple de la Figure 1, le module de décision MOD_{PD} comporte des moyens d'accès à une base de données BC constituée par une base de connaissances issues d'une analyse des défaillances pouvant affecter le système complexe et de leur criticité associée.

La **Figure 2** représente un exemple de message MSG_{PC} de panne consolidé pouvant être utilisé dans un système de détection de panne conforme à l'invention.

Ce message comporte cinq champs à savoir :
- un champs DATE comportant la date de la panne ;
- un champs ID_{SS} comportant un identifiant du sous-système affecté par la panne ou, le cas échéant un identifiant du système si la panne affecte le système dans son ensemble ;
- un identifiant ID_{COMP} du composant affecté par la panne ;
- le niveau NC3 de confiance de troisième ordre obtenu par le module MOD_{FD} de fusion de données ; et
- l'identifiant ID_{PANNE} de cette panne.

Les informations des premier, deuxième et troisième champs du message MSG_{PC} de panne consolidé constituent des informations INF_{PC} consolidées sur la panne au sens de l'invention.

Le message de panne MSG_{PC} peut être envoyé en parallèle vers un terminal pour interprétation rapide des résultats.

Dans l'exemple de réalisation décrit ici les messages MSG_{PB} de panne bruts ont un format identique au message MSG_{PC} de panne consolidé sauf en ce qu'ils comportent, dans leurs quatrièmes champs, un niveau NC2 de confiance du deuxième ordre.

La **Figure 3** représente un enregistrement de la base de données BC.

Cet enregistrement comporte quatre champs à savoir :
- un champs ID_{SS} comportant l'identifiant d'un sous-système ;
- un champs ID_{PANNE} comportant l'identifiant d'une panne ;
- un champs NG comportant un niveau de gravité de cette panne ; et
- un champ ID_{ACTION} comportant l'identifiant d'une action prédéfinie à entreprendre en relation avec ladite panne.

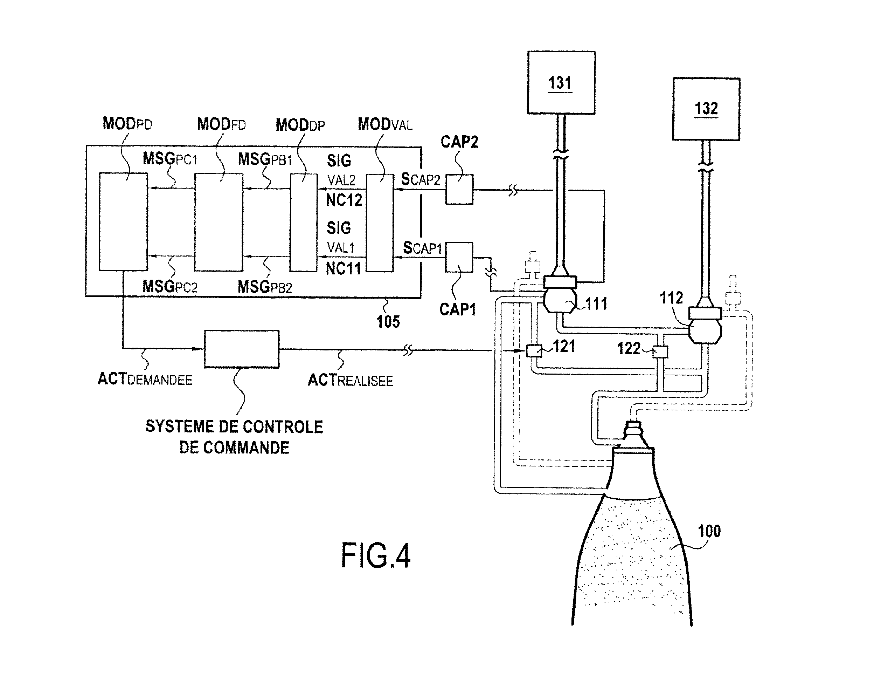

La **Figure 4** représente un moteur de fusée conforme à l'invention.

Ce moteur comporte deux réservoirs d'ergol référencés 131 et 132 chacun en amont d'une pompe 111, 112. Le débit de chacun de ces ergols peut être régulé par une vanne 121, 122. Dans le mode de réalisation décrit ici ce moteur comporte :
- un premier capteur CAP1 apte à mesurer les vibrations V₁₁₁ ou l'accélération de cette pompe 111 et à délivrer un signal S_{CAP1} représentatif de ces vibrations ; et
- un deuxième capteur CAP2 apte à mesurer la pression P₁₁₁ en sortie de la pompe 111 et à délivrer un signal S_{CAP2} représentatif de cette pression.

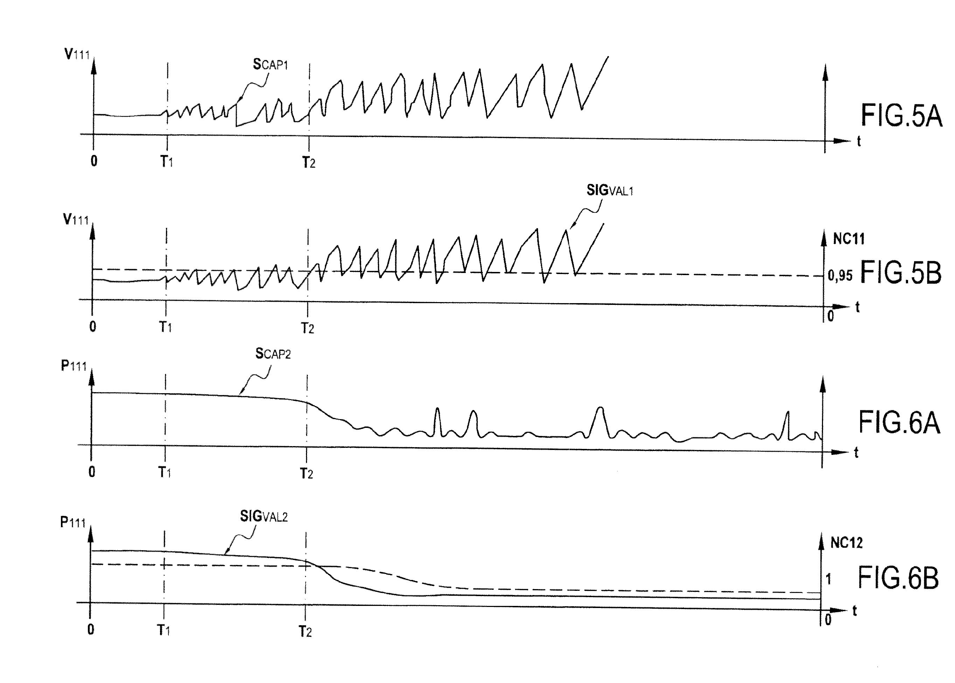

Ces signaux S_{CAP1} et S_{CAP2} sont représentés aux Figures 5A et 6A.

Nous supposerons, en référence à ces figures, que l'aube d'une turbine commence à se dégrader à un instant T₁ et que cette dégradation entraine la perte de l'aube à un instant T₂, l'aube fonctionnant normalement entre les instants 0 et T₁.

Par conséquent l'instant T₁ peut être considéré comme l'amorce de la rupture de l'aube.

On remarque sur ces diagrammes, que la pression P₁₁₁ en sortie de la pompe 111 chute légèrement entre les instants T₁ et T₂ puis brutalement à partir de l'instant T₂ correspondant à la perte de l'aube.

Ce moteur comporte un système de détection et de diagnostic de pannes 105 conforme à l'invention.

Conformément à l'invention, les signaux S_{CAP1} et S_{CAP2} sont traités par un module de validation MOD_{VAL}.

Par conséquent, conformément à l'invention, ce module de validation délivre deux signaux validés SIG_{VAL1} et SIG_{VAL2} représentés aux Figures 5B et 6B, chacun associé avec un niveau de confiance de premier ordre respectivement NC11, NC12 représentés sur les Figures 5B et 6B en traits pointillés.

Dans cet exemple, le niveau de confiance du premier ordre NC11 du capteur CAP1 reste élevé, c'est-à-dire égal à 0,95.

En revanche, le niveau de confiance du premier ordre NC12 du capteur CAP2 commence à diminuer légèrement à l'instant T₂ puis beaucoup plus brutalement jusqu'à atteindre une valeur sensiblement égale à 0.45.

Dans l'exemple décrit ici, le niveau de confiance de premier ordre NC12 du capteur CAP2 chute mais néanmoins, on considère dans cet exemple que le niveau de confiance du CAP2 reste suffisant pour mesurer la pression en sortie de la pompe 111.

Par conséquent, dans cet exemple, le module de validation MOD_{VAL} ne génère pas de message de panne capteur MSG_{CAP}.

Dans l'exemple de réalisation décrit ici, le signal SIG_{VAL1} correspond au signal S_{CAP1} mais le signal SIG_{VAL2} est obtenu à partir du signal S_{CAP2} par suppression du bruit de mesure.

Les signaux SIG_{VAL1} et SIG_{VAL2} sont reçus, avec les niveaux de confiance de niveau 1 NC11 et NC12 par un module MOD_{DP} de détection de panne.

Dans l'exemple de réalisation décrit ici, ce module de détection de panne MOD_{DP} est apte à détecter une panne affectant une turbine du moteur (cette turbine étant un sous-système au sens de l'invention).

A cet effet, ce module met en oeuvre deux algorithmes aptes :
- d'une part à analyser les vibrations d'une turbine ; et
- d'autre part à analyser la performance d'une turbine.

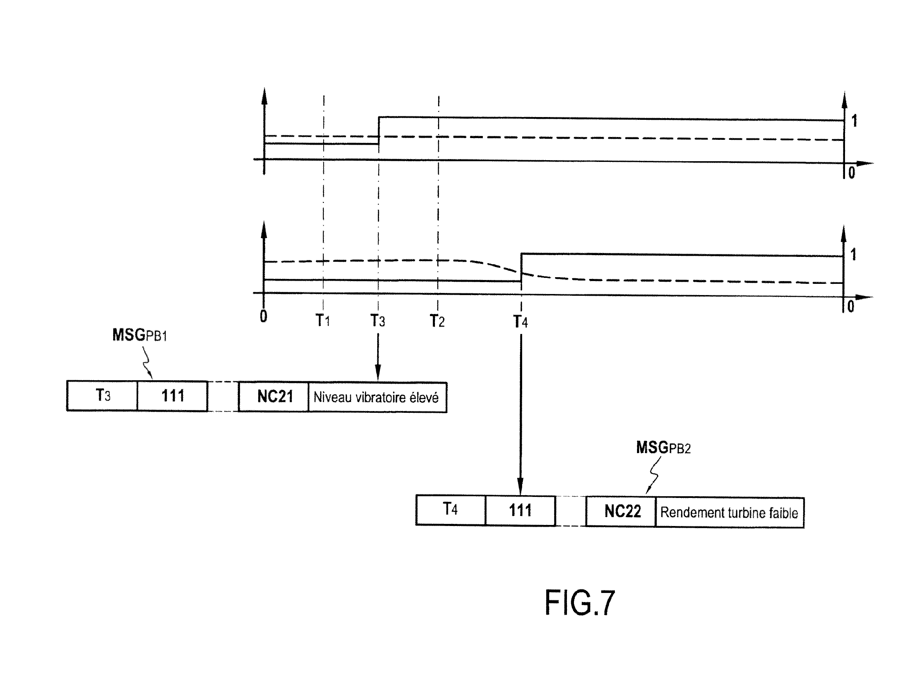

Dans le mode de réalisation décrit ici, le module MOD_{DP} de détection de panne détecte, respectivement à des instants T₃ et T₄ représentés Figure 7 :
- un premier disfonctionnement (« niveau vibratoire élevé turbine ») avec un niveau de confiance de deuxième ordre NC21 égale à 0,9 ; et
- un deuxième disfonctionnement (« rendement turbine faible ») avec un niveau de confiance de deuxième ordre NC22 égal à 0,45.

Ces informations constituent des informations brutes au sens de l'invention.

Elles sont envoyées, à un module de fusion de données MOD_{FD}, dans des messages de panne bruts MSG_{PB1} et MSG_{PB2} aux instants T₃ et T₄.

Conformément à l'invention, le module MOD_{FD} de fusion de données génère, à partir des messages de pannes bruts MSG_{PB1} et MSG_{PB2} reçus aux instants T₃ et T₄ un ou plusieurs messages de pannes consolidés.

Dans l'exemple de réalisation décrit ici nous supposerons que le module MOD_{FD} de fusion de données fusionne les informations brutes contenues dans les messages bruts MSG_{PB1} et MSG_{PB2} pour générer, respectivement aux instants T₃ et T₄ :
- un premier message de panne consolidé MSG_{PC1} identique au message de panne MSG_{PB1} ; et
- un deuxième message de panne consolidé MSG_{PC2} obtenu par fusion des informations brutes contenues dans les deux messages de pannes bruts MSG_{PB1} et MSG_{PB2}.
Le message de panne consolidé MSG_{PC2} est représenté à la Figure 8.

Dans cet exemple, nous supposerons que le module de fusion de données apte à détecter la perte d'une aube de la turbo-pompe 111, avec un niveau de confiance de troisième ordre NC32 égale 0.7, la date de perte de l'aube étant estimée à l'instant T₄.

Les messages de pannes consolidés MSG_{PC1} et MSG_{PC2} sont fournis à un module de prise de décision MOD_{PD} respectivement aux instants T₃ et T₄.

Conformément à l'invention, le module MOD_{PD} de prise de décision considère, sur la base des deux messages consolidés MSG_{PC1} et MSG_{PC2} si une action doit être entreprise.

Dans l'exemple de réalisation décrit ici, sur réception du premier message consolidé MSG_{PC1}, le module MOD_{PD} de prise de décision décide d'attendre la réception d'un autre message consolidé avant de déclencher une action physique sur un organe du moteur.

Par contre, sur réception du deuxième message consolidé MSG_{PC2}, le module MOD_{PD} de prise de décision effectue deux actions à savoir :
- l'émission d'un message de panne ; et
- le déclenchement d'une commande pour réduire la poussée afin de compenser la panne.

Cette deuxième action est matérialisée, sur la Figure 4, par la flèche référencée ACT_{DEMANDEE} ; elle est réalisée dans cet exemple par un système de commande qui agit dans cet exemple sur la vanne 121 régulant les débits des réservoirs d'ergol 131 et 132.

Dans l'exemple de réalisation décrit ici, le module de prise de décision MOD_{PD} utilise une technique de logique floue connue de l'homme du métier qui sera détaillée ci-après.

Conformément à l'invention, la prise de décision quant à l'action à entreprendre (ou pas) est effectuée en fonction du niveau de confiance de troisième ordre NC3 et du niveau de gravité NG de la panne détectée.

Dans le mode de réalisation décrit ici, ces variables NC3, NG varient dans l'intervalle [0 ; 1].

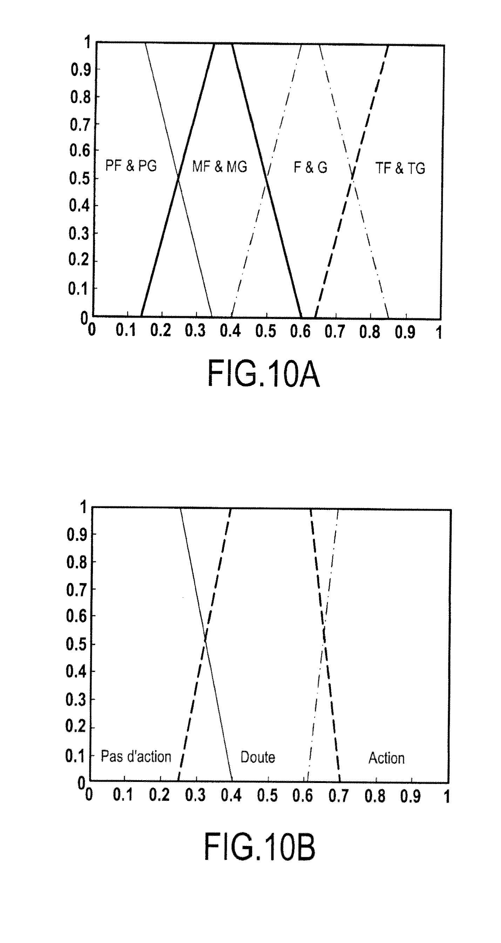

Pour illustrer un exemple de mise en oeuvre de l'invention, on considère que le module de prise de décision MOD_{PD} utilise les deux tableaux T_{NC3}, T_{NG} dont les fonctions d'appartenance sont caractérisées par les tableaux suivants et représentées sous forme de trapèzes aux figures 10A et 10B :

**Tableau T_{NC3}**

| **Niveau de confiance de troisième niveau (NC3)** | **Valeur** |
|---|---|
| Peu fiable (PF) | NC3=[0 ; 0, 15 ; 0,35] Y=[1 ; 1 ; 0] |
| Moyennement fiable (MF) | NC3=[0,15 ; 0,35 ; 0,4 ; 0,6] Y=[0 ; 1 ; 1 ; 0] |
| Fiable (F) | NC3=[0,4 ; 0,6 ; 0,65 ; 0,85] Y=[0 ; 1 ; 1 ; 0] |
| Très fiable (TF) | NC3=[0,65 ; 0,85 ; 1] Y=[0 ; 1 ; 1] |

**Tableau T_{NG}**

| **Niveau de gravité (NG)** | **Valeur** |
|---|---|
| Peu grave (PG) | NG=[0 ; 0,15; 0,35] Y=[1 ; 1 ; 0] |
| Moyennement grave (MG) | NG=[0,15 ; 0,35 ; 0,4 ; 0,6] Y=[0 ; 1 ; 1 ; 0] |
| Grave (G) | NG=[0,4 ; 0,6 ; 0,65 ; 0,85] Y=[0; 1 ; 1 ; 0] |
| Très grave (TG) | NG=[0,65 ; 0,85 ; 1] Y=[0 ; 1 ; 1] |

La sortie du module de prise de décision MOD_{PD} décide de la mise en place ou non d'une action corrective par rapport à la panne diagnostiquée. Dans l'exemple de réalisation décrit ici, cette variable « Décision » varie dans le même domaine que les données d'entrées NC3, NG ; la fonction d'appartenance est conforme au découpage présenté dans le tableau T_{DEC} suivant :

**Tableau T_{DEC}**

| **Décision (DEC)** | **Valeur** |
|---|---|
| Pas d'action (PA) | DEC=[0 ; 0,26 ; 0,4] Y=[1 ; 1 ; 0] |
| Doute (D) | DEC=[0,26 ; 0,4 ; 0,62 ; 0,7] Y=[0 ;1 ;1 ;0] |
| Action (A) | DEC=[0,62 ; 0,7 ; 1] Y=[0 ; 1 ; 1] |

Les trois tableaux T_{NC3}, T_{NG} et T_{DEC} sont mémorisés par le module de prise de décision MOD_{PD}.

Le tableau T_{REG} ci-dessous récapitule les règles précédentes :

**Tableau T_{REG}**

| Décision | | NC3 | | | |
|---|---|---|---|---|---|
| | | PF | MF | F | TF |
| NG | PG | PA | PA | PA | PA |
| | MG | PA | D | A | A |
| | G | D | A | A | A |
| | TG | D | A | A | A |

Dans l'exemple de réalisation décrit ici, on associe à chaque événement faisant partie de l'intervalle doute une valeur T_{MAX} de séjour maximal dans cet état ; si cette valeur est atteinte, l'arrêt du système est ordonné pour des raisons de sécurité.

## Revendications

1. Système de détection et de localisation de pannes dans un système complexe comportant :
- au moins un capteur (CAP) pour délivrer un signal (S_{CAP}) représentatif du fonctionnement d'un composant (COMP) dudit système complexe ;
- au moins un module (MOD_{VAL}) de validation du bon fonctionnement dudit au moins un capteur (CAP) apte à analyser ledit signal (S_{CAP}) et à délivrer :
- au moins un signal validé (SIG_{VAL}) associé à un niveau de confiance (NC1) dit de « premier ordre » ; ou
- un message (MSG_{CAP}) représentatif d'une panne dudit au moins un capteur (CAP) ;
- un module (MOD_{DP}) de détection de panne apte à détecter une panne affectant au moins un sous-système (SS1, SS2) ou un composant (COMP) à partir dudit signal validé (SIG_{VAL}), et lorsqu'une telle panne est détectée, à générer au moins un message (MSG_{PB}) de panne brut comportant des informations brutes (INF_{PB}) sur ladite panne et un niveau de confiance (NC2) dit de « deuxième ordre » ;
- un module (MOD_{FD}) de fusion de données apte à générer, au moins à partir d'un dit message de panne brut (MSG_{PB}) ou dudit message (MSG_{CAP}) représentatif d'une panne d'au moins un capteur (CAP), un message de panne consolidé (MSG_{PC}) comportant des informations consolidées (INF_{PC}) sur une panne affectant au moins un sous-système (SS1, SS2) dudit système complexe (SC) ou un composant et un niveau de confiance (NC3) dit de « troisième ordre » ; et
- un module (MOD_{PD}) de prise de décision apte à obtenir ledit message de panne consolidé (MSG_{PC}), et à décider, en utilisant une technique de logique floue d'au moins une action corrective par rapport à la panne diagnostiquée à entreprendre en fonction :
- desdites informations consolidées sur une panne (INF_{PC}) ;
- dudit niveau de confiance de troisième ordre (NC3) ; et
- d'un niveau de gravité (NG) de ladite panne obtenu à partir d'une base de connaissances.
ladite action corrective à entreprendre consistant à arrêter le système complexe, à désactiver, activer ou réactiver un composant dudit système complexe, à modifier son point de fonctionnement ou à faire une requête vers un système de régulation.

2. Système de détection et de localisation de pannes selon la revendication 1 dans lequel ledit module de prise de décision (MOD_{PD}) comporte des moyens pour obtenir ledit niveau de gravité (NG) et pour identifier ladite action à déclencher dans une base de données (BC).

3. Système de détection et de localisation de pannes selon la revendication 1 ou 2 dans lequel ledit module de prise de décision comporte des moyens (11) pour évaluer ledit niveau de gravité (NG).

4. Système de détection et de localisation de pannes selon l'une quelconques des revendications 1 à 3 dans lequel ladite action consiste à agir sur au moins un composant dudit système complexe.

5. Système de détection et de localisation de pannes selon l'une quelconque des revendications 1 à 4 dans lequel ladite action consiste à attendre au moins un autre message de panne consolidé (MSG_{PC}) pour confirmer si ladite action doit être entreprise ou non.

6. Moteur de fusée comportant un système de détection et de localisation de pannes (105) selon l'une quelconque des revendications 1 à 5.

## Patentansprüche

1. System zur Erkennung und Lokalisierung von Ausfällen in einem komplexen System, umfassend:
- wenigstens einen Sensor (CAP) zur Bereitstellung eines Signals (S_{CAP}), das für den Betrieb einer Komponente (COMP) des komplexen Systems repräsentativ ist,
- wenigstens ein Modul (MOD\/_{AL}) zur Bestätigung des richtigen Funktionierens des wenigstens einen Sensors (CAP), das geeignet ist, das Signal (S_{CAP}) zu analysieren und geeignet ist, zu liefern:
- wenigstens ein bestätigtes Signal (SIG_{VAL}), das einem sogenannten Vertrauensniveau (NC1) "erster Ordnung" zugeordnet ist, oder
- eine Meldung (MSG_{CAP}), die für einen Ausfall des wenigstens einen Sensors (CAP) repräsentativ ist,
- ein Modul (MOD_{DP}) zur Ausfallerkennung, das geeignet ist, einen wenigstens ein Teilsystem (SS1, SS2) oder eine Komponente (COMP) beeinträchtigenden Ausfall anhand des bestätigten Signals (SIG_{VAL}) zu erkennen und, wenn ein solcher Ausfall erkannt ist, wenigstens eine Bruttoausfallmeldung (MSG_{PB}), die Bruttoinformationen (INF_{PB}) über den Ausfall und ein sogenanntes Vertrauensniveau (NC2) "zweiter Ordnung" umfasst, zu generieren,
- ein Modul (MOD_{FD}) zur Verknüpfung von Daten, das geeignet ist, wenigstens anhand einer Bruttoausfallmeldung (MSG_{PB}) oder der für einen Ausfall wenigstens eines Sensors (CAP) repräsentativen Meldung (MSG_{CAP}) eine gefestigte Ausfallmeldung (MSG_{PC}) zu generieren, die gefestigte Informationen (INF_{PC}) über einen wenigstens ein Teilsystem (SS1, SS2) des komplexen Systems (SC) oder eine Komponente beeinträchtigenden Ausfall sowie ein sogenanntes Vertrauensniveau (NC3) "dritter Ordnung" umfasst, und
- ein Modul (MOD_{PD}) zum Treffen einer Entscheidung, das geeignet ist, die gefestigte Ausfallmeldung (MSG_{PC}) zu erhalten und unter Verwendung einer Fuzzy-Logik-Technik über wenigstens eine Korrekturaktion in Bezug auf den diagnostizierten Ausfall zu entscheiden, die zu unternehmen ist in Abhängigkeit:
- von den gefestigten Informationen über einen Ausfall (INF_{PC}),
- von dem Vertrauensniveau dritter Ordnung (NC3) und
- von einem Schweregrad (NG) des Ausfalls, der aus einer Wissensbank erhalten wird,
wobei die zu unternehmende Korrekturaktion darin besteht, das komplexe System anzuhalten, eine Komponente des komplexen Systems zu deaktivieren, aktivieren oder reaktivieren, ihren Betriebspunkt zu verändern oder eine Anfrage an ein Regelungssystem zu machen.

2. System zur Erkennung und Lokalisierung von Ausfällen nach Anspruch 1, wobei das Entscheidungsmodul (MOD_{PD}) Mittel umfasst, um den Schweregrad (NG) zu erhalten und um die auszulösende Aktion in einer Datenbank (BC) zu ermitteln.

3. System zur Erkennung und Lokalisierung von Ausfällen nach Anspruch 1 oder 2, wobei das Entscheidungsmodul Mittel (11) zur Bewertung des Schweregrades (NG) umfasst.

4. System zur Erkennung und Lokalisierung von Ausfällen nach einem der Ansprüche 1 bis 3, wobei die Aktion darin besteht, auf wenigstens eine Komponente des komplexen Systems einzuwirken.

5. System zur Erkennung und Lokalisierung von Ausfällen nach einem der Ansprüche 1 bis 4, wobei die Aktion darin besteht, wenigstens eine weitere gefestigte Ausfallmeldung (MSG_{PC}) abzuwarten, um zu bestätigen, ob die Aktion unternommen werden muss oder nicht.

6. Raketentriebwerk, umfassend ein System zur Erkennung und Lokalisierung von Ausfällen (105) nach einem der Ansprüche 1 bis 5.

## Claims

1. A system for detecting and locating failures in a complex system, comprising:
- at least one sensor (CAP) for delivering a signal (S_{CAP}) representing the functioning of a component (COMP) of the said complex system;
- at least one module (MOD_{VAL}) validating the proper functioning of the said at least one sensor (CAP) capable of analysing the said signal (S_{CAP}) and of delivering:
- at least one validated signal (SIG_{VAL}) associated with a so-called « first order » confidence level (NC1); or
- a message (MSG_{CAP}) representing a failure of the said at least one sensor (CAP);
- a failure detection module (MOD_{DP}) capable of detecting a failure affecting at least one sub-system (SS1, SS2) or a component (COMP) from the said validated signal (SIG_{VAL}) and, if such a failure is detected, of generating at least one raw failure message (MSG_{PB}) comprising raw information (INF_{PB}) on the said failure and a so-called « second order» confidence level (NC2);
- a data merging module (MOD_{FD}) which, at least from a said raw failure message (MSG_{PB}) or from said message (MSG_{CAP}) representing a failure of at least one sensor (CAP), is capable of generating a consolidated failure message (MSG_{PC}) comprising consolidated information (INF_{PC}) on a failure affecting at least one sub-system (SS1, SS2) of the said complex system (SC) or a component and a so-called «third order » confidence level (NC3); and
- a decision-making module (MOD_{PD}) capable of obtaining the said consolidated failure message (MSG_{PC}) and of deciding, using a fuzzy logic technique at least one corrective action in relation to the diagnosed failure that is to be taken in relation to:
- the said consolidated information on a failure (INF_{PC});
- the said third order confidence level (NC3); and
- a level of seriousness (NG) of the said failure obtained from a knowledge database,
the corrective action to be taken consisting of stopping the complex system, of deactivating, activating or reactivating a component of said complex system, of modifying its point of functioning or of sending a request to a regulating system.

2. The failure detection and locating system according to claim 1 wherein the said decision-making module (MOD_{PD}) comprises means for obtaining the said level of seriousness (NG) and for identifying the said action to be triggered in a database (BC).

3. The failure detection and locating system according to claim 1 or 2 wherein the said decision-making module comprises means (11) for evaluating the said level of seriousness (NG).

4. The failure detection and locating system according to any of claims 1 to 3 wherein the said action consists of acting on at least one component of the said complex system.

5. The failure detection and locating system according to any of claims 1 to 4 wherein the said action consists of waiting for at least one other consolidated failure message (MSG_{PC}) to confirm whether the said action must or must not be taken.

6. A rocket engine comprising a failure detection and locating system (105) according to any of claims 1 to 5.
